# EUROPÄISCHE PATENTANMELDUNG

(11) **EP 2 354 905 A2**
(43) Veröffentlichungstag der Anmeldung: **10.08.2011**
(21) Anmeldenummer: 10194171.4
(22) Anmeldetag: 08.12.2010
(51) Int. Cl.: G06F 3/041, G06F 3/01

(54) **Steuerungsvorrichtung für eine Kunststoff verarbeitende Maschine**

(30) Priorität: 07.01.2010 DE 102010004123
(71) Anmelder: KraussMaffei Technologies GmbH, 80997 München (DE)
(72) Erfinder: Grimm, Günther, 86567, Hilgertshausen (DE)
(74) Vertreter: Wilhelm, Ludwig

(57) **Zusammenfassung**

Beschrieben wird eine Steuerungsvorrichtung für eine Kunststoff verarbeitende Maschine, umfassend eine Datenverarbeitungseinrichtung (30), die unter anderem mit Aktuatoren, Sensoren sowie mit einem Ein- und Ausgabegerät (10) verbunden oder verbindbar ist, wobei das Ein- und Ausgabegerät (10) einen Bildschirm und die Datenverarbeitungseinrichtung (30) einen Prozesser aufweisen, und letzterer zur Ansteuerung des Bildschirms dient, wobei der Bildschirm zumindest teilweise eine berührungsempfindliche Oberfläche (2) aufweist, so dass der Bildschirm zumindest in diesem Bereich als Touchscreen (2) ausgebildet ist, wobei Maschinen-Bedienfelder (Vₙ, Zₙ) in dem Touchscreen (2) mittels der Datenverarbeitungseinrichtung (30) erzeug- und darstellbar sind. Um ein blindes Bedienen der Steuerungsvorrichtung zu ermöglichen, ist erfindungsgemäß vorgesehen, dass bei Berührung eines von der Datenverarbeitungseinrichtung (30) erzeugten und in dem Touchscreen (2) dargestellten Maschinen-Bedienfeld (Vₙ, Zₙ) durch eine Bedienperson eine taktile Rückmeldung durch Erzeugung ein oder mehrerer über die Haut der Bedienperson wahrnehmbare Stromimpulse vorgesehen ist.

## Beschreibung

### Beschreibung

Die Erfindung betrifft eine Steuerungsvorrichtung für eine Kunststoff verarbeitenden Maschine gemäß dem Oberbegriff von Patentanspruch 1.

Bei Kunststoff verarbeitenden Maschinen kommen vermehrt Steuerungsvorrichtungen mit Ein- und Ausgabegeräten zum Einsatz, die einen Bildschirm aufweisen, der zumindest teilweise eine berührungsempfindliche Oberfläche aufweist, so dass der Bildschirm zumindest in diesem Bereich als Touchscreen ausgebildet ist. In diesem Touchscreen-Bereich sind Bedienfelder vorgesehen oder darstellbar, über die Eingaben gemacht werden können.

Aus der gattungsbildenden DE 10 2007 050 073 B4 ist ein Bildschirm mit einem Touchscreen-Bereich bekannt, wobei Bedienfelder softwaremäßig realisiert und dargestellt werden können. Auf diese Weise ist es möglich, je nach Maschinentyp, Maschinenausstattung und vorhandener Maschinensoftware nur solche Bedienfelder darzustellen bzw. anzuzeigen, deren Funktionalität in der Maschine insgesamt oder beim jeweiligen Betriebszustand auch tatsächlich vorhanden ist. Andere Bedienfelder, die in dem vorliegenden Betriebszustand nicht möglich sind, werden überhaupt nicht dargestellt. Denkbar ist auch eine unterschiedliche Darstellung von Bedienfeldern mit aktivierter Funktion einerseits und Bedienfeldern mit gesperrter oder nicht aktivierter Funktion andererseits. Insgesamt ist somit eine große Vielfalt an Darstellungsmöglichkeiten gegeben. Nachteilig an dieser Steuerungsvorrichtung ist jedoch, dass die Bedienfelder nicht ohne Beobachtung des Bildschirms betätigt werden können. Daher kann eine Bedienperson nicht gleichzeitig einen Bereich der Spritzgießmaschine betrachten, z.B. die Formhälften eines Werkzeugs, und gleichzeitig blind die Bedienfelder betätigen.

Aus der WO 2008/071669 A1 ist ein Bildschirm bekannt, in dessen Touchscreen-Bereich Bedienfelder vorgesehen sind, die bei einer Berührung durch eine Bedienperson eine taktile Rückmeldung an die Bedienperson erzeugen. Für die Erzeugung der taktilen Rückmeldung werden verschiedene Maßnahmen vorgeschlagen. Zum Einen können erfühlbare Bedienfelder vorgesehen werden, beispielsweise durch eine entsprechende Prägung in der Oberfläche. Außerdem kann eine taktile Rückmeldung über ein Klicken von sogenannten Knackfröschen erfolgen. Weiterhin wird eine taktile Rückmeldung durch Erzeugung von Vibrationen vorgeschlagen. Auf diese Weise wird im Unterschied zu dem vorgenannten Stand der Technik eine blinde Bedienung der Steuerungsvorrichtung ermöglicht, was auch Ziel der in der WO 2008/071669 A1 offenbarten Erfindung ist. Nachteilig ist jedoch, dass die taktile Rückmeldung einer Bedientaste oder eines Bedienfeldes örtlich fest vorgegeben ist und damit im Unterschied zu dem vorgenannten Stand der Technik eine individuelle Darstellung der Bedienfelder nur eingeschränkt möglich ist, beispielsweise indem an ein und demselben Ort je nach Betriebszustand unterschiedliche Bedienfelder aktiviert sind. Ein individuelles Layout einer Maschinenbedientastatur unter Berücksichtigung der örtlich festgelegten taktilen Rückmeldung ist somit nicht realisierbar.

Aus der WO99/63498A2 ist ein elektrisches Kommunikationssystem bekannt, wobei auf einem Touchscreen eines Computers transparente Elektroden in Form von Pads aufgeklebt sind, über die Stromimpulse an eine Person übertragen werden, die diese Elektroden bzw. Pads berührt.

Ausgehend von dem eingangs Stand der Technik liegt der Erfindung die Aufgabe zugrunde, eine Steuerungsvorrichtung einer Kunststoff verarbeitenden Maschine mit Tochscreen-Bereich und taktiler Rückmeldung bei Bedienfeldern vorzuschlagen, die sich durch eine erhöhte Flexibilität auszeichnet, mehr Gestaltungsmöglichkeiten zur Erzeugung unterschiedlicher taktiler Rückmeldungen bietet und unterschiedliche Layouts der Maschinenbedientastatur zulässt.

Die Lösung dieser Aufgabe erfolgt durch eine Steuerungsvorrichtung mit den Merkmalen von Anspruch 1. Vorteilhafte Ausgestaltungen und Weiterentwicklungen finden sich in den abhängigen Ansprüchen.

Dadurch, dass bei Berührung eines von der Datenverarbeitungseinrichtung erzeugten und in dem Touchscreen dargestellten Maschinen-Bedienfeld (Vₙ, Zₙ) durch eine Bedienperson eine taktile Rückmeldung durch Erzeugung ein oder mehrerer über die Haut der Bedienperson wahrnehmbare Stromimpulse vorgesehen ist, kann die Steuerungsvorrichtung auch "blind" betätigt werden. Die Bedienperson kann ihren Blick auf ein bestimmtes Maschinenteil richten, z.B. die Schließeinheit der Spritzgießmaschine oder auf die Auswerferstangen in einem Formwerkzeug, und gleichwohl diese Maschinenteile durch Berühren der hierfür von der Datenverarbeitungseinrichtung erzeugten und dargestellten Maschinen-Bedienfelder betätigen.

Für die Erzeugung der Stromimpulse kann der Touchscreen eine Vielzahl von elektrischen Leitungen aufweisen, die mit einem geeigneten Gerät zur Erzeugung der Stromimpulse verbunden sind, wobei in jedem der Bedienfelder (Vₙ, Zₙ) mindestens zwei voneinander beabstandete Leitungen vorgesehen sind, die bei Berührung durch eine Bedienperson kurzgeschlossen werden, so dass von dem Bedienfeld (Vₙ, Zₙ) eine taktile Rückmeldung über ein oder mehrere über die Haut der Bedienperson wahrnehmbare Stromimpulse erfolgen kann, wenn das Maschinen-Bedienfeld (Vₙ, Zₙ) von der Bedienperson berührt wird. Insbesondere können zur Erzeugung der Stromimpulse eine Vielzahl von feinen und voneinander beabstandeten Drähten in den Touchscreen integriert oder darauf oder dahinter angeordnet sein, wobei zumindest derjenige Bereich des Touchscreens diese Drähte aufweist, der für die Darstellung der Maschinen-Bedientasten (Vₙ, Zₙ) vorgesehen ist.

Da für die Erzeugung der taktilen Rückmeldung ein oder mehrere über die Haut der Bedienperson wahrnehmbare Stromimpulse vorgesehen sind, kann auf einfache Art und Weise eine individuelle Einstellung der taktilen Rückmeldung erfolgen. Man braucht lediglich den oder die Stromimpulse auf die gewünschte taktile Rückmeldung einzustellen. Dies kann beispielsweise durch Einstellung der Höhe und/oder der Frequenz der Stromimpulse erfolgen.

In Abhängigkeit eines aktuellen oder gewünschten Betriebszustandes der Maschine können an dem Ein- und Ausgabegerät der Steuerungsvorrichtung von einer Bedienperson verschiedene Eingaben zum Einrichten oder Betreiben der Maschine erforderlich sein. Je nach Betriebszustand können hierfür unterschiedliche Bedienfelder in dem Touscreen-Bereich zur Verfügung gestellt werden. Von den jeweils zur Verfügung stehenden Bedienfeldern können solche Bedienfelder vorhanden sein, die aktuell nicht zur Betätigung vorgesehen sind, d.h. deren Funktion aktuell nicht vorhanden bzw. deaktiviert ist, oder die nicht ausgeführt werden darf. Solche Bedienfelder sollen vorliegend als verbotene Bedienfelder oder verbotene Maschinen-Bedienfelder bezeichnet werden. Daneben können solche Bedienfelder vorhanden sein, die aktuell zur Betätigung vorgesehen sind, d.h. deren Funktion aktuell vorhanden ist und auch ausgeführt werden kann. Solche Bedienfelder sollen vorliegend als zulässige Bedienfelder oder zulässige Maschinen-Bedienfelder bezeichnet werden.

In einer Weiterbildung der Erfindung kann die taktile Rückmeldung in verbotenen Bedienfeldern sich von der taktilen Rückmeldung in zulässigen Bedienfeldern unterscheiden. In einer ersten Ausgestaltung kann eine taktile Rückmeldung mittels der Stromimpulse nur bei den verbotenen oder nur bei den zulässigen Bedienfeldern vorgesehen sein. Eine weitere Möglichkeit besteht darin, dass bei den zulässigen Bedienfeldern die Höhe und/oder die Frequenz der Stromimpulse niedriger ist bzw. sind als in den verbotenen Bedienfeldern. Auf diese Weise kann in den verbotenen Bedienfeldern eine von einer Bedienperson eher unangenehm empfundene taktile Rückmeldung vorliegen, wohingegen bei den zugelassenen Bedienfeldern eine eher angenehm empfundene taktile Rückmeldung vorliegen. Die Höhe der Stromimpulse und/oder die Frequenz können in bedarfsgerecht eingestellt werden, um jeweils eine eher "unangehmes Empfinden" einerseits und ein eher "angenehmes Empfinden" andererseits richtig "einzustellen".

Je nach Anordnung von verbotenen und zugelassenen Bedienfeldern in dem Touchscreen-Bereich kann es sinnvoll sein, dass mit zunehmendem Abstand von einem zulässigen Bedienfeld die Höhe und/oder die Frequenz der Stromimpulse in den verbotenen Bedienfeldern erhöht ist. Auf diese Weise kann über den Grad des unangenehmen Empfindens der Bedienperson ein Maß für den Abstand zu einem zugelassenen Bedienfeld vermittelt werden. Je näher die Bedienperson sich dem zulässigen Bedienfeld nähert, um so weniger unangenehm fällt die taktile Rückmeldung aus. Gegebenenfalls kann hierbei die taktile Rückmeldung in dem zulässigen Bedienfeld auf "Null" reduziert werden, d.h. es erfolgt keine taktile Rückmeldung.

Die taktile Rückmeldung kann auch von dem Betriebszustand der Maschine abhängig gemacht werden. Beispielsweise kann bei Eingaben im Zusammenhang mit der Einrichtung der Maschine eine stärkere taktile Rückmeldung vorgesehen sein als bei Eingaben im Zusammenhang mit dem laufenden Betrieb der Maschine. Beim Einrichten der Maschine kann ein verbotenes Bedienfeld also einen höheren Grad an unangenehmem Empfinden bei der Bedienperson erzeugen als beim laufenden Betrieb der Maschine. Denkbar ist aber auch der umgekehrte Fall.

Es kann auch vorgesehen werden, dass sich die taktile Rückmeldung verändert, wenn sich die Bedienperson mit ihrer Kontaktfläche, wie zum Beispiel einer Fingerspitze, zum Rand eines Maschinenbedienfelds und darüberhinaus bewegt. Beispielsweise kann die Intensität der Stromimpulse zum Rand eines Maschinenbedienfeldes zunehmen. Sie kann aber auch abnehmen. Es kann aber auch auf eine andere Art und Weise ein Gradient in der taktilen Rückmeldung vorgesehen sein. Es kommt lediglich darauf an, dass die Bedienperson wahrnimmt bzw. erfühlt, wenn sie sich von einem Bedienfeld entfernt. Es wird quasi ein erfühlbarer Rand eines Maschinenbedienfeldes erzeugt.

Die Einstellung der jeweils gewünschten taktilen Rückmeldung, d.h. die Einstellung der Parameter für die Stromimpulse, kann ihrerseits über geeignete Bedienfelder in dem Touchscreen-Bereich erfolgen.

Insgesamt erlaubt die Erfindung eine flexible Einstellung der taktilen Rückmeldung von Bedienfeldern in dem Touchscreen-Bereich des Bildschirms und zwar unter Beibehaltung der flexiblen softwaremäßigen Darstellung der Bedienfelder.

Nachfolgend soll die Erfindung anhand von Ausführungsführungsbeispielen näher beschrieben werden.

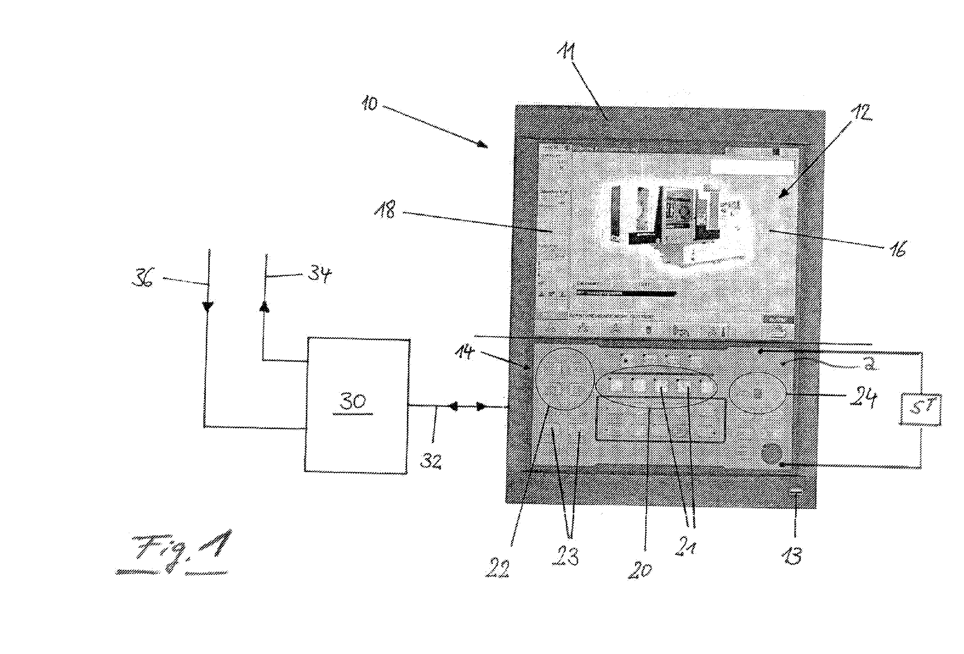

Die Figur 1 stellt in stark schematisierter Weise eine Steuerungsvorrichtung dar, wie sie für sich genommen aus der gattungsbildenden DE102007050073B4 bekannt ist. Dabei ist ein Bildschirm 10 mit einem Gehäuse 11 zu erkennen, in dem ein Stecker 13 (hier USB-Stecker) angeordnet ist. Der Bildschirm 10 ist in zwei Bildschirmbereiche 12 und 14 unterteilt, wobei im oberen Bildschirmbereich 12 Eingabeelemente 16 darstellbar sind. Dies ist vorliegend eine Spritzgießmaschine in Perspektivansicht. Es können aber auch Teile einer Spritzgießmaschine wie die Einspritz- oder die Schließseite sein oder Werte für entsprechende Komponenten und Elemente (Temperaturwerte, Druckwerte etc.). Gleichzeitig sind als Randleisten auch im ersten Bildschirmbereich 12 Softkeys 18 realisiert, die mittels Anordnung einer berührungsempfindlichen Touch-Oberfläche betätigt werden können und ein entsprechendes Signal über eine bidirektionale Leitung 32 an eine Datenverarbeitungseinrichtung 30 übergeben. In der Datenverarbeitungseinrichtung 30 ist überdies ein Prozessor enthalten, der die Verarbeitung der Daten und die Ansteuerung des Bildschirms wie auch die Signale von den Eingabeeinrichtungen des Bildschirms empfängt. Die Datenverarbeitungseinrichtung 30 ist über Leitungen 34 und 36 mit einer Spritzgießmaschine verbunden, gibt an diese beispielsweise über die Leitung 34 Steuerbefehle ab und empfängt Signalinformationen über die Informationsleitung 36.

In einem zweiten Bildschirmbereich 14 sind lediglich die Maschineneingabetasten bzw. Maschinenbedienfelder softwaremäßig bzw. per grafischer Darstellung realisiert. Dazu ist in diesem Bildschirmbereich 14 ebenfalls eine berührungsempfindliche Touch-Oberfläche 2 vorgesehen. Je nach Maschinentyp, vorliegender Software, Funktionsumfang oder Betriebszustand können nun die entsprechenden Eingabeelemente bzw. Maschinenbedienfelder (d.h die Schalter) in dem zweiten Bildschirmbereich 14 dargestellt und aktiv geschaltet werden. Die Möglichkeit, ob eine bestimmte Funktionalität aufgrund des Maschinentyps, der Maschinenausstattung, der eingespielten Softwareversion, der Maschinenelemente bzw. des Maschinenzustands bzw. des Betriebszustandes gegeben ist, ist in der Datenverarbeitungseinrichtung 30 hinterlegt, wird von dieser geprüft und entsprechend der hinterlegten Logik wird die Darstellung durchgeführt. Gemäß der Überprüfung durch die Datenverarbeitungseinrichtung erfolgt die Darstellung und Aktivschaltung der entsprechenden Eingabeelemente bzw. Maschinenbedienfelder (Schalter) in der zweiten Bildschirmhälfte.

So ist beim vorliegenden Ausführungsbeispiel lediglich ein erster Softkey-Bereich 20 aktiv geschaltet, in dem sich Softkeys bzw. Maschinenbedienfelder erster Art 21 (z.B. der Plastifiziereinheit oder der Schließeinheit zugeordnet) befinden. Dagegen sind mehrere Bereiche, nämlich ein zweiter Softkey-Bereich 22 mit Maschinen-Bedienfeldern (Softkeys) zweiter Art und Maschinenbedienfelder in einem dritten Softkey-Bereich 24 inaktiv geschaltet, was über die Darstellung (Schattierung) kenntlich gemacht ist. Diese inaktiv geschalteten Maschinen-Bedienfelder können nicht betätigt werden, so dass entsprechende Bedienanweisungen von der Datenverarbeitungseinrichtung 30 ignoriert werden.

Auf diese Art und Weise kann nur derjenige Funktionsumfang gewählt und mittels der Datenverarbeitungseinrichtung 30 angezeigt werden, der in der jeweiligen Betriebsweise je nach Maschine zur Verfügung steht. Dies erlaubt eine sehr variable und intuitive Bedienerführung. Zudem ist es möglich, die Maschinensteuerung auf die Bedürfnisse des Anwenders anzupassen. So kann das Bediendesign bzw. das Layout der Maschinen-Bedienfelder nach Bedarf und Wunsch geändert werden. Es sind damit firmenspezifische bzw. kundenspezifische Layouts möglich. Überdies können auch Layouts älterer Steuergenerationen auf diese Art und Weise dargestellt werden.

Gemäß der hier vorliegenden Erfindung ist für die Maschinen-Bedienfelder darüberhinaus eine taktile Rückmeldung durch Erzeugung ein oder mehrerer über die Haut der Bedienperson wahrnehmbarer Stromimpulse vorgesehen. Auf diese Weise kann sowohl die Flexibiltät in der Darstellung der Maschinen-Bedienfelder aus der DE102007050073B4 erhalten und gleichwohl ein blindes Bedienen der Spritzgießmaschine ermöglicht werden.

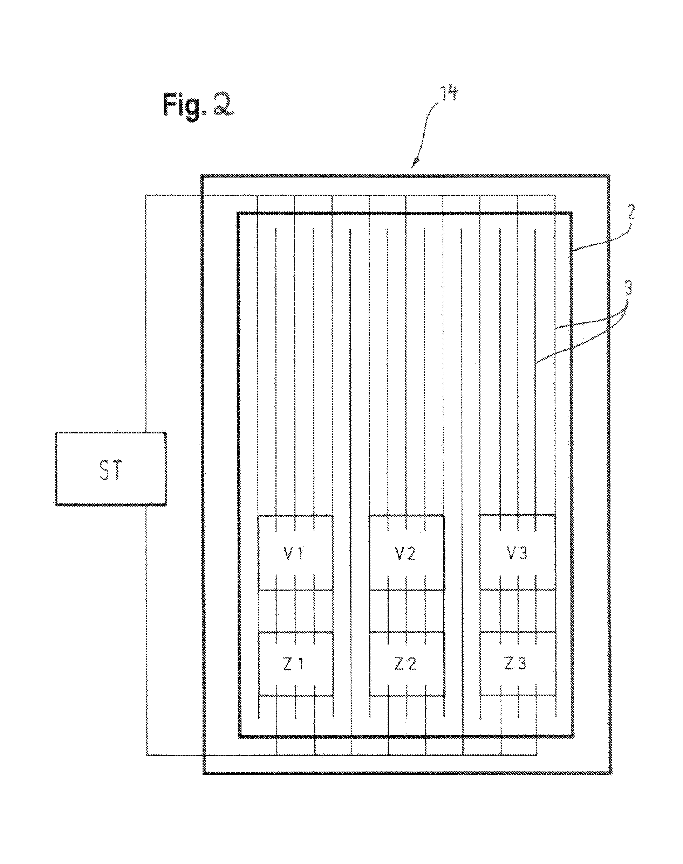

Die Figur 2 zeigt schematisch den vorgenannten zweiten Bildschrimbereich 14 mit der berührungsempfindlichen Oberfläche 2, beispielsweise als Touchfolie. In die Oberfläche 2 integriert oder darauf oder dahinter sind sehr feine Drähte 3 angeordnet, die mit einem Gerät ST zur Erzeugung einer oder mehrerer Stromimpulse (Stromimpulsgenerator) verbunden sind. Das vorgenannte Gerät ST kann auch in die Steuerungsvorrichtung integriert sein und von der Datenverarbeitungseinrichtung 30 angesteuert werden. Über diese Drähte 3 können ein oder mehrere Stromimpulse ausgelöst werden, wenn die Oberfläche 2 von einer Bedienperson berührt wird. In einem bestimmten Betriebszustand der Spritzgießmaschine wird eine erste untere Reihe von Maschinen-Bedienfeldern Z1, Z2 und Z3 angezeigt, deren Funktion aktiviert ist. Es handelt sich um die zulässigen Bedienfelder. Darüber befindet sich eine Reihe weiterer Maschinen-Bedienfelder V1 , V2 und V3, deren Funktion für diesen Betriebszustand deaktiviert ist. Es handelt sich um die verbotenen Bedienfelder.

In einer ersten Ausgestaltung der Erfindung kann eine taktile Rückmeldung mittels der Stromimpulse nur bei den verbotenen Bedienfeldern V1, V2 und V3 vorgesehen sein. Alternativ könnte aber auch nur bei den zulässigen Bedienfeldern Z1, Z2 und Z3 eine taktile Rückmeldung über Stromimpulse vorgesehen sein. Eine weitere Möglichkeit besteht darin, dass bei den zulässigen Bedienfeldern Z1, Z2, und Z3 die Höhe und/oder die Frequenz der Stromimpulse niedriger ist bzw. sind als in den verbotenen Bedienfeldern V1, V2 und V3. Auf diese Weise kann in den verbotenen Bedienfeldern V1, V2 und V3 eine von einer Bedienperson eher unangenehm empfundene taktile Rückmeldung vorliegen, wohingegen bei den zugelassenen Bedienfeldern Z1, Z2 und Z3 eine eher angenehm empfundene taktile Rückmeldung vorliegt. Im Bedarfsfall kann die taktile Rückmeldung in einer Gruppe von verbotenen Bedienfeldern und/oder in einer Gruppe von zugelassenen Bedienfeldern auch variieren. Beispielsweise könnte die taktile Rückmeldung von V1 nach V3 zunehmen oder abnehmen. Denkbar ist auch eine Variation nur der Höhe der Stromimpulse oder nur der Frequenz der Stromimpulse innerhalb einer Gruppe von Bedienfeldern.

Darüberhinaus kann vorgesehen werden, dass die Intensität der Stromimpulse zum Rand eines Maschinen-Bedienfelds hin sich verändert, beispielsweise zu- oder abnimmt, so dass die Bedienperson erkennen bzw. erfühlen kann, wenn sie sich von einem Maschinen-Bedienfeld wegbewegt, weil beispielsweise der Finger, mit dem das Maschinen-Bedienfeld berührt wird, nach oben oder unten oder auch zur Seite verrutscht.

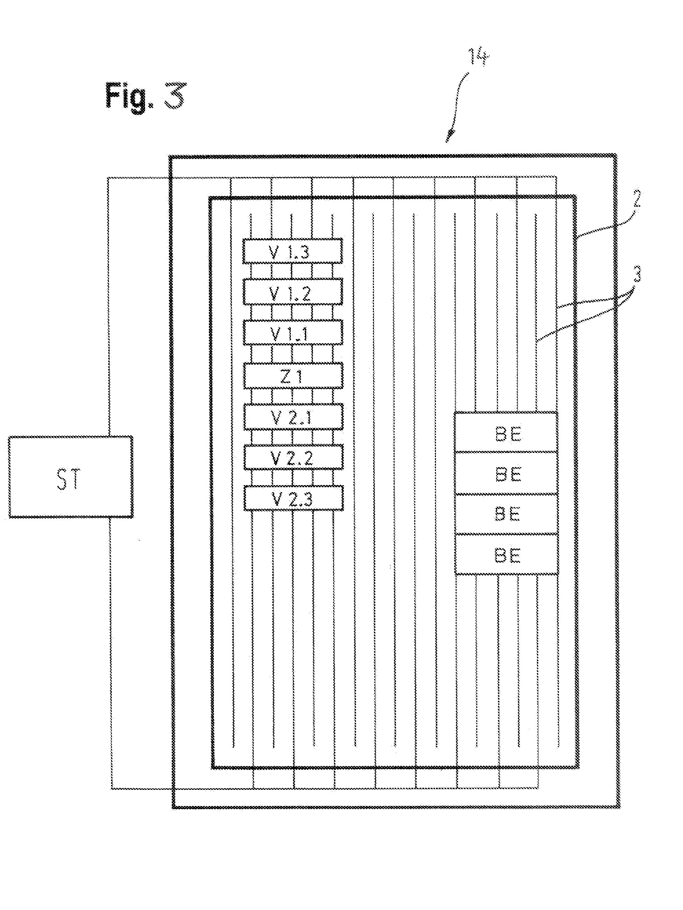

Die Figur 3 zeigt eine Darstellung für einen anderen Betriebszustand der Spritzgießmaschine. Nunmehr stehen andere verbotene Bedienfelder V1.1, V1.2, V1.3, ..., V2.1, V2.2, V2.3,...sowie andere zugelassene Bedienfelder Z1, Z2, ...zur Verfügung. Im Unterschied zur Figur 2 kann nun vorgesehen sein, dass mit zunehmendem Abstand von einem zugelassenen Bedienfeld Zₙ eine zunehmend als unangenehm empfundene taktile Rückmeldung vorgesehen ist. Beispielsweise könnte die Höhe und/oder Frequenz der Stromimpulse mit zunehmendem Abstand von einem zugelassenen Bedienfeld Zₙ steigen. Auf diese Weise kann einer Bedienperson deutlicher mitgeteilt werden, wenn sie sich von zugelassenen Bedienfeldern entfernt.

Die Höhe der Stromimpulse und/oder deren Frequenz können bedarfsgerecht eingestellt werden, um jeweils eine eher "unangenehmes Empfinden" einerseits und ein eher "angenehmes Empfinden" andererseits richtig "einzustellen". Die Einstellung selbst, d.h. die Einstellung der Parameter für die Stromimpulse, kann ihrerseits über geeignete Bedienfelder BE in dem Touchscreen-Bereich des Bildschirms erfolgen. Hierzu können entsprechende Bedienfelder BE aufgerufen und aktiviert werden. In der Figur 3 ist schematisch eine Reihe solcher Bedienfelder BE dargestellt.

Insgesamt ist es mit der vorliegenden Erfindung möglich, nunmehr auch eine Steuerungsvorrichtung mit rein grafisch dargestellter Maschinenbedientastatur mit Blick auf die einzustellenden Maschinenteile ― also quasi blind - zu bedienen, indem eine taktile Rückmeldung über die Stromimpulse erfolgt. Da die Maschinen-Bedienfelder rein softwaremäßig erzeugt und dargestellt werden, kann die aus der DE102007050073B4 bekannte Flexibilität der Darstellung ausgenutzt werden. Die verbotenen Maschinen-Bedienfelder V1, V2, ... und die zugelassenen Maschinen-Bedienfelder Z1, Z2,... können in beliebiger Darstellung und an beliebigem Ort des Bildschirmbereichs 14 erzeugt und dargestellt werden. Daher können sie auch untereinander die Funktion tauschen, d.h. ein zunächst zugelassenes Bedienfeld Z1 kann in einem nächsten Betriebszustand der Spritzgießmaschine zu einem verbotenen Bedienfeld V1 werden und umgekehrt. Ebenso kann die Position der verbotenen Maschinen-Bedienfelder und der zugelassenen Maschinen-Bedienfelder beliebig gewählt werden. Mittels der Datenverarbeitungseinrichtung 30 kann außerdem vorgesehen und eingerichtet werden, wann welche Stromimpulse erzeugt werden.

## Patentansprüche

1. Steuerungsvorrichtung für eine Kunststoff verarbeitende Maschine, umfassend eine Datenverarbeitungseinrichtung (30), die unter anderem mit Aktuatoren, Sensoren sowie mit einem Ein- und Ausgabegerät (10) verbunden oder verbindbar ist, wobei das Ein- und Ausgabegerät (10) einen Bildschirm (1) und die Datenverarbeitungseinrichtung (30) einen Prozesser aufweisen, und letzterer zur Ansteuerung des Bildschirms (1) dient, wobei der Bildschirm (1) zumindest teilweise eine berührungsempfindliche Oberfläche (2) aufweist, so dass der Bildschirm (1) zumindest in diesem Bereich als Touchscreen (2) ausgebildet ist, wobei Maschinen-Bedienfelder (Vₙ, Zₙ) in dem Touchscreen (2) mittels der Datenverarbeitungseinrichtung (30) erzeug- und darstellbar sind,
**dadurch gekennzeichnet, dass**
bei Berührung eines von der Datenverarbeitungseinrichtung (30) erzeugten und in dem Touchscreen (2) dargestellten Maschinen-Bedienfeld (Vₙ, Zₙ) durch eine Bedienperson eine taktile Rückmeldung durch Erzeugung ein oder mehrerer über die Haut der Bedienperson wahrnehmbare Stromimpulse vorgesehen ist.

2. Steuerungsvorrichtung nach Anspruch 1,
**dadurch gekennzeichnet, dass**
der Touchscreen (2) eine Vielzahl von elektrisch leitfähigen Elementen aufweist, insbesondere eine Vielzahl von elektrischen Leitungen (3), die mit einem Gerät (ST) zur Erzeugung der Stromimpulse verbunden sind, wobei in jedem der Bedienfelder (Vₙ, Zₙ) mindestens zwei voneinander beabstandete elektrisch leitfähige Elemente vorgesehen sind, insbesondere zwei voneinander beabstandete elektrische Leitungen (3), die bei Berührung durch eine Bedienperson kurzgeschlossen werden, so dass von dem Bedienfeld (Vₙ, Zₙ) eine taktile Rückmeldung über ein oder mehrere über die Haut der Bedienperson wahrnehmbare Stromimpulse erfolgen kann, wenn das Maschinen-Bedienfeld (Vₙ, Zₙ) von der Bedienperson berührt wird.

3. Steuerungsvorrichtung nach Anspruch 1 oder 2,
**dadurch gekennzeichnet, dass**
zur Erzeugung der Stromimpulse eine Vielzahl von feinen und voneinander beabstandeten elektrischen Elementen, insbesondere eine Vielzahl von feinen und voneinander beabstandeten Drähten (3), in den Touchscreen (2) integriert oder darauf oder dahinter angeordnet sind, wobei derjenige Bereich des Touchscreens (2) diese elektrisch leitfähigen Elemente aufweist, insbesondere die Drähte (3), der für die Darstellung der Maschinen-Bedientasten (Vₙ, Zₙ) vorgesehen ist.

4. Steuerungsvorrichtung nach einem der vorstehenden Ansprüche,
**dadurch gekennzeichnet, dass**
Maschinen-Bedienfelder vorhanden sind, deren Funktion deaktiviert ist oder nicht ausgeführt werden darf, nachfolgend verbotene Bedienfelder (Vₙ) genannt, und dass Maschinen-Bedienfelder vorhanden sind, deren Funktion aktiviert ist und ausgeführt werden darf, nachfolgend zulässige Maschinen-Bedienfelder (Zₙ) genannt, und dass die taktile Rückmeldung in den verbotenen Maschinen-Bedienfeldern (Vn) sich von der taktilen Rückmeldung in den zulässigen Maschinen-Bedienfeldern (Zn) unterscheidet.

5. Steuerungsvorrichtung nach Anspruch 4,
**dadurch gekennzeichnet, dass**
eine taktile Rückmeldung mittels der Stromimpulse nur bei den verbotenen Maschinen-Bedienfeldern (Vn) oder nur bei den zulässigen Maschinen-Bedienfeldern (Zn) vorgesehen ist.

6. Steuerungsvorrichtung nach Anspruch 4,
**dadurch gekennzeichnet, dass**
in den zulässigen Maschinen-Bedienfeldern (Zn) die Höhe und/oder die Frequenz der Stromimpulse niedriger sind als in den verbotenen Maschinen-Bedienfeldern (Vn).

7. Steuerungsvorrichtung nach Anspruch 4,
**dadurch gekennzeichnet, dass**
mit zunehmendem Abstand von zulässigen Maschinen-Bedienfeldern (Zn) die Höhe und/oder die Frequenz der Stromimpulse in den verbotenen Maschinen-Bedienfeldern (Vn) erhöht ist.

8. Steuerungsvorrichtung nach einem der vorstehenden Ansprüche,
**dadurch gekennzeichnet, dass**
die Stromimpulse in den Maschinen-Bedienfeldern (Zn, Vn) von einer bestimmten Betriebsweise oder Betriebsstellung der Maschine abhängig sind.

9. Steuerungsvorrichtung nach einem der vorstehenden Ansprüche,
**dadurch gekennzeichnet, dass**
sich die taktile Rückmeldung verändert, wenn sich die Bedienperson mit ihrer Kontaktfläche, wie zum Beispiel einer Fingerspitze, zum Rand eines Maschinenbedienfelds und darüberhinaus bewegt.

10. Steuerungsvorrichtung nach Anspruch 9,
**dadurch gekennzeichnet, dass**
sich die Intensität der Stromimpulse zum Rand eines Maschinenbedienfeldes verändert, beispielsweise zunimmt.

11. Steuerungsvorrichtung nach einem der vorstehenden Ansprüche,
**dadurch gekennzeichnet, dass**
Bedienfelder (BE) für die Einrichtung der Stromimpulse vorgesehen oder darstellbar sind.
